# EUROPÄISCHE PATENTANMELDUNG

(11) **EP 2 146 163 A2**
(43) Veröffentlichungstag der Anmeldung: **20.01.2010**
(21) Anmeldenummer: 09159861.5
(22) Anmeldetag: 11.05.2009
(51) Int. Cl.: F25D 13/02, A01N 1/02

(54) **Blutlagervorrichtung, Blutbanklagersystem und Verfahren zum Betrieb eines Blutbanklagersystems**

(30) Priorität: 10.07.2008 DE 102008032407
(71) Anmelder: DOMETIC S.a.r.l., 9808 Hosingen (LU)
(72) Erfinder: Billen, Stephan, 54634 Bitburg (DE); Müller, Josef, 54669 Bollendorf (DE); Pinto, Admilson, Dr. Ing., 54298 Aach (DE)
(74) Vertreter: Grosse, Felix Christopher

(57) **Zusammenfassung**

Blutlagervorrichtung 1 zur Lagerung von Blutbauteln 8, insbesondere in einer Blutbank, wobei die Blutbanklagervorrichtung 1 ein einen Kühlraum umschließendes und eine Zugangsöffnung 3 aufweisendes Gehäuse 2 und ein Heiz- und Kühlaggregat umfasst, wobei im Kühlraum eine Mehrzahl von schubladenförmig ausgebildeten Lagerfächern 4 vorgesehen ist und das einzelne Lagerfach 4 der Mehrzahl von schubladenförmig ausgebildeten Lagerfächern 4 derart beweglich auf einem Schienensystem 5 gelagert ist, dass das einzelne Lagerfach 4 aus der Zugangsöffnung 3 ausziehbar ist, sowie Blutbanklagersystem 11 und Verfahren zum Betrieb desselben.

## Beschreibung

Die Erfindung betrifft eine Blutlagervorrichtung nach dem Oberbegriff des Anspruchs 1, ein Blutbanklagersystem umfassend mindestens einer Blutlagervorrichtung nach dem Oberbegriff des Anspruchs 11 und ein Verfahren zum Betreiben der Blutlagervorrichtung nach dem Oberbegriff des Anspruchs 20.

Spender- oder Eigenblut enthaltene Blutbeutel oder Blutkonserven werden in Blutbanken bis zum Zeitpunkt der Verwendung gelagert. Üblicherweise unterhält jedes Krankenhaus eine Blutbank, um sich für den Eigenbedarf zu versorgen. Die Größe einer solchen Blutbank ist abhängig von der Größe des Krankenhauses und der Tatsache, ob es sich beispielsweise um eine Schwerpunktklinik handelt, die häufig Operationen mit hohen zu erwartenden Blutverlusten durchführt. Unikliniken hingegen unterhalten meist umfangreichere Blutbanken, da sie teilweise das Blut, welches durch den anonymen Selbstausschluss nicht zur Spende freigegeben ist, und dessen Bestandteile für Versuchszwecke gebrauchen.

Für die Lagerung von Blutbeuteln mit Spenderblut sind gekühlte Lagerräume bekannt. Diese bestehen aus einem klimatisierten und thermoisolierten Raum, in welchem Lagervorrichtungen, wie Hochregale oder dergleichen, angeordnet sind, in welchen die Blutbeutel bei einer voreingestellten Temperatur gelagert werden.

Die Temperierung des Lagerraums erfolgt in Abhängigkeit von den eingelagerten Blutkonserven, meist auf eine Temperatur von circa 4 °C für die Einlagerung von Erythrozyten-Konzentraten oder auf eine Temperatur von circa 20 °C für die Einlagerung von Thrombozyten, aber auch im Fall der Einlagerung von Blutplasma unter den Gefrierpunkt, wobei Erythrozyten nach 42 Tagen und Thrombozyten schon nach 7 Tagen nicht mehr verwendbar sind. Lediglich Blutplasma ist tiefgefroren bei Temperaturen von -30°C und kälter bis zu zwei Jahre haltbar.

Die üblicherweise verwendeten Beutel enthalten je nach Typ etwa 300 ml Blut(-bestandteile). Der genaue Typ, die Blutgruppe, Untergruppen, die Blutformel und eine eindeutige Konservennummer sind mittels Etiketten auf den Konservenbeuteln vermerkt. Die Konservennummern werden nach dem Eurocode-Standard vergeben. Dadurch ist jederzeit nachvollziehbar, welche Konserve von welchem Institut aufbereitet und ausgegeben wurde.

Der temperierte Lagerraum selbst verfügt über einen verschließbaren Zugang mit einer thermoisolierten Tür, über welchen der temperierte Lagerraum für das Lagerpersonal betretbar ist. Das Lagerpersonal ist für die Lagerhaltung, insbesondere für die Befüllung, Platzierung und Entleerung der einzelnen Lagerbereiche verantwortlich. Dabei erfolgt dies durch Betreten des temperierten Lagerraums durch den Lagerhalter, der die Verteilung der Blutbeutel in die entsprechenden Fächer des Regals händisch erledigt. Während einer Entnahme erfolgt die Identifikation des gewünschten Blutbeutels anhand der auf den Etiketten vermerkten Informationen durch den Lagerhalter.

Dabei stellen der Umstand der händischen Verteilung der Blutbeutel in die Lagerfächer und vor allem die Tatsache der meist unter Zeitdruck zu geschehenden händischen Identifikation und Auswahl der benötigten Blutbeutel im Bedarfsfall Fehlerquellen dar, so dass es zu Fehlentnahmen und Falschlieferungen kommen kann. Dies führt bei der nachgelagerten Verwendung der benötigten Blutkonserven insbesondere im Operationssaal, welche zum großen Teil zeitkritisch erfolgt, zu erheblichen Zeitverzögerungen und zu notwendigen Korrekturlieferungen, welche unnötigen Mehrkosten nach sich ziehen. Zudem erfordert der Lagervorgang bzw. Entnahmevorgang regelmäßig ein Betreten des teilweise im Tieftemperaturbereich gehaltenen Lagerraums durch das Lagerpersonal. Dies kann auf Dauer eine gesundheitliche Belastung des Lagerpersonals durch den rapiden Wechsel von Raumtemperatur hin zu Tieftemperaturen unter dem Gefrierpunkt und zurück zur Raumtemperatur darstellen. Zudem ist ein erhöhter Energieaufwand notwendig, um den gesamten Kühlraum permanent auf der notwendigen Kühl- oder Gefriertemperatur zu halten. Dies wird auch durch das stetige Betreten des Raumes durch das Lagerpersonal und das damit verbundene häufige Öffnen der Zugangstür noch zusätzlich gefördert. Um eine Lagerung der unterschiedlichen Blutkonserven in verschiedenen geforderten Temperaturbereichen zu ermöglichen sind zudem verschiedene auf die jeweilige Kühltemperatur eingestellte temperierte Lagerräume notwendig.

Es ist somit Aufgabe der vorliegenden Erfindung eine flexible Möglichkeit der Lagerung von unterschiedlichen Blutkonserven vorzuschlagen, welche die aus dem Stand der Technik bekannten Nachteile beseitigt. Insbesondere ist es dabei eine Aufgabe eine Möglichkeit der Lagerung von Blutkonserven vorzuschlagen, welche eine schnelle Einlagerung verbunden mit einer schnellen und fehlerfreien Identifikation und Entnahme des benötigten Blutbeutels ermöglicht. Es ist zudem Aufgabe, eine Lagervorrichtung für Blutkonserven vorzuschlagen, welche die Notwendigkeit des Betretens des Kühlraumes durch Lagerpersonal auf ein Mindestmaß reduziert. Es ist weiterhin Aufgabe, eine Lagervorrichtung für Blutkonserven vorzuschlagen, welche energieeffizient und ökonomisch eine Lagerung von in unterschiedlichen Temperaturbereichen zu lagernden Blutkonserven ermöglicht.

Diese Aufgaben werden gelöst durch die erfindungsgemäße Blutlagervorrichtung nach dem kennzeichnenden Teil des Anspruchs 1, das erfindungsgemäße Blutbanklagersystem, insbesondere zur Verwendung in einer Blutbank, nach dem kennzeichnenden Teil des Anspruchs 11 und durch das erfindungsgemäße Verfahren zum Betrieb des Blutbanklagersystems nach dem kennzeichnenden Teil des Anspruchs 20.

Die einzelne Blutlagervorrichtung ist dabei in der Art eines Kühlgerätes, insbesondere in der Art eines Kühlschranks oder einer Kühltruhe mit einem thermoisolierten Gehäuse ausgebildet, wobei der temperierbare Innenraum, im Weiteren verallgemeinernd als Kühlraum bezeichnet, zur Lagerung der Blutbeutel im Inneren des Gehäuses über eine vorzugsweise an der Frontseite der Blutlagervorrichtung angeordnete Zugangsöffnung zugänglich ist. Über ein geeignetes Heiz- und Kühlaggregat ist die Blutlagervorrichtung auf die geforderte Temperatur einstellbar. Alternativ ist die erfindungsgemäße Blutlagervorrichtung auch als Tieftemperaturlagervorrichtung, d. h. als ein so genannter Freezer, ausgebildet, der zur Einlagerung von Blutplasma auf Temperaturen von unter -30°C temperierbar ist. Im Rahmen der Erfindung soll jedoch vereinfachend der Begriff der Blutlagervorrichtung Verwendung finden, wobei diese die so genannten Freezer als Alternativgestaltung umfasst.

Die Zugangsöffnung ist nicht mit einer thermoisolierten Türe wie beispielsweise bei aus dem Stand der Technik bekannten Haushaltsgeräten versehen. Stattdessen ist im Inneren der Blutlagervorrichtung eine Mehrzahl von vorzugsweise vierzehn einzelnen Lagerfächern angeordnet, wobei das einzelne Lagerfach in der Art einer Schublade ausgebildet ist. Es ist jedoch auch eine andere Anzahl von Lagerfächern denkbar. Das einzelne Lagerfach ist dabei beweglich auf einem Schienensystem derart gelagert, dass es aus der Zugangsöffnung des Gehäuses der Blutlagervorrichtung ausziehbar ist. Dies ermöglicht einen schnellen Zugriff auf den in dem einzelnen Lagerfach angeordneten Blutbeutel, ohne die nicht betroffenen Lagerfächer öffnen zu müssen. Das einzelne schubladenförmige Lagerfach selbst weist dabei eine Unterteilung in eine Mehrzahl von vorzugsweise drei Reihen mit jeweils fünf Einzelfächern, also insgesamt fünfzehn Einzelfächern auf. Es ist jedoch auch eine andere Aufteilung und insbesondere eine andere Anzahl an Einzelfächern denkbar. Die Einzelfächer sind dabei durch Wände vorzugsweise mit einer geringeren Wandhöhe als diejenigen des schubladenförmigen Lagerfachs voneinander abgegrenzt und derart gestaltet, dass der einzelne Blutbeutel im jeweiligen Einzelfach insbesondere liegend gelagert werden kann. Es ist allerdings auch denkbar, die Ausgestaltung der Wände derart zu verändern, dass der einzelnen Blutbeutel auch stehend im Einzelfach gelagert werden kann, was eine zusätzliche Lagerkapazität schafft. Dabei ist es möglich, die Anordnung der Wände ebenfalls veränderbar, beispielsweise durch Steckwände, zu gestalten, um eine flexible Anpassung der Größe der Einzelfächer an unterschiedlich große Blutbeutel zu ermöglichen. Der Boden des schubladenförmigen Lagerfachs und damit der Einzelfächer kann in vorteilhafter Weise als Lochmaske ausgebildet sein, um eine gute Durchlüftung und insbesondere eine homogene Temperaturverteilung in der Blutlagervorrichtung sicherzustellen.

Das einzelne ausziehbare schubladenförmige Lagerfach ist an der Frontseite mit einer thermoisolierten Blende versehen, wobei die einzelnen Blenden insbesondere unter Einbeziehung einer an den einzelnen Blenden befestigten Dichtung derart dimensioniert sind, dass die Zugangsöffnung der Blutlagervorrichtung bei eingeschobener Stellung aller Lagerfächer insgesamt verschlossen und gegenüber der Umgebung der Blutlagervorrichtung thermoisoliert ist. An der Frontseite der Blende können weitere Halterungen und Bedienelemente angebracht sein, beispielsweise zur Aufnahme von Identifikationseinrichtungen, insbesondere in Form von Schildern. Zudem ist denkbar, an der Frontseite eine Griffleiste zum manuellen Öffnen des schubladenförmigen Lagerfachs oder auch eine Eingriffsvorrichtung zum Angreifen einer separaten außerhalb der Blutlagervorrichtung angeordneten automatischen Öffnungsvorrichtung vorzusehen.

Nach einer Weiterbildung der Blutlagervorrichtung ist die Schienenmechanik des einzelnen schubladenförmigen Lagerfachs mit einem vorzugsweise als elektrischen Motor ausgebildeten Antrieb ausgestattet, der einen automatisierten auch teilweisen Ausschub des Lagerfachs bei Ansteuerung des Antriebs durch eine zentrale, vorzugsweise außerhalb des Blutkühlschranks angeordnete Steuereinheit ermöglicht. Der Antrieb des einzelnen Lagerfachs besitzt dabei eine Notfallöffnung, sodass im Falle eines Stromausfalls das einzelne schubladenförmige Lagerfach manuell geöffnet bzw. verschlossen werden kann.

Es wird erfindungsgemäß weiterhin vorgeschlagen, mindestens eine, vorzugsweise jedoch eine Mehrzahl von beispielsweise zehn einzelnen erfindungsgemäßen Blutlagervorrichtungen im Zusammenschluss als Blutbanklagersystem einzusetzen.

Bei einer Mehrzahl von Blutlagervorrichtungen des Blutbanklagersystems ist dabei vorzugsweise in zwei parallel zueinander angeordneten Reihen angeordnet, wobei deren Zugangsöffnungen vorzugsweise einander zugewandt sind. Allerdings sind auch weitere Anordnungen der einzelnen Blutkühlschränke, beispielsweise in Hufeisenform, denkbar.

Nach einer Weiterbildung des in einem als Lagerraum bezeichneten Raums befindlichen Blutbanklagersystems weist dieses einen vorzugsweise an der Decke des Lagerraums angeordneten und auf einem Schienensystem beweglichen Roboter auf. Das Schienensystem ist dabei vorzugsweise zentral zwischen den einzelnen Blutlagervorrichtungen angeordnet und ermöglicht eine Bewegung des Roboters entlang des Schienensystems zwischen den Blutlagervorrichtungen. Denkbar ist allerdings auch die Anordnung des Roboters auf dem Boden des Lagerraums, in welchem sich das Blutbanklagersystem befindet. Dabei ist auch denkbar, einen autonomen, d. h. ohne einen durch ein Schienensystem fest definierten Verfahrweg beweglichen, sensorgesteuerten Roboter einzusetzen, der sich zwischen den einzelnen Blutlagervorrichtungen bewegt.

Der Roboter selbst verfügt über eine vorzugsweise an einem gelenkigen Arm angeordnete Bestückungs- und Entnahmevorrichtung. Die Bestückungs- und Entnahmevorrichtung ist vorzugsweise pneumatisch betrieben und weist mindestens einen Saugnapf, vorzugsweise aber eine Mehrzahl an Saugnäpfen auf. Die Bestückungs- und Entnahmevorrichtung ermöglicht somit ein Ansaugen und Halten des jeweiligen Blutbeutels und, nach Ansteuerung der gewünschten Position und Freigabe des Blutbeutels, eine Ablage desselben in das bereitgestellte Einzelfach des zuvor mittels des Motors ausgefahrenen schubladenförmigen Lagerfachs des Blutkühlschranks. Die Entnahme erfolgt in umgekehrter Weise durch Ansaugen des gewünschten Blutbeutels und Abtransport mittels des Roboters. Die Bestückungs- und Entnahmevorrichtung des Roboters kann auch in einer Weiterbildung einen Öffnungsmechanismus aufweisen, und zwar insbesondere in dem Fall, wenn das einzelne schubladenförmige Lagerfach der Blutlagervorrichtung keinen elektrischen Öffnungsmechanismus aufweist.

Zudem weist die Bestückungs- und Entnahmevorrichtung eine Identifikationsvorrichtung, vorzugsweise als Barcode-Scanner ausgebildet, auf, welche eine Identifikation des jeweiligen Blutbeutels über einen auf den Blutbeutel aufgebrachten Barcode-Aufkleber ermöglicht.

Nach einer Weiterbildung des erfindungsgemäßen Blutbanklagersystems ist neben dem Barcode-Aufkleber jeder Blutbeutel mit einem RF/ID-Transponder ausgerüstet, der eine zweite Identifikation des einzelnen Blutbeutels, auch ohne optischen Kontakt, mittels elektromagnetischer Wellen ermöglicht. Jedes einzelne Lagerfach weist dabei eine Leseeinheit auf, welche nach Bestückung des Lagerfachs mit einem Blutbeutel die mittels RF/ID-Transponder bereitgestellten Identifikationsinformationen des einzelnen Blutbeutels ausliest und an eine zentrale Steuereinheit zur weiteren Verarbeitung und Speicherung übermittelt. Dadurch werden in besonders vorteilhafter Weise eine exakte Erfassung des Befüllungsstandes des Lagersystems sowie die Ermittlung der Lagerposition spezifischer Blutbeutel möglich. Ein rasches Auffinden des jeweiligen benötigten Blutbeutels bereits vor dem eigentlichen Einleiten des Entnahmevorgangs ist damit sichergestellt. Über die Identifikation mittels Barcode-Scanner erfolgt dann eine zweite Überprüfung. Mittels der in der Steuereinheit gespeicherten Informationen ist somit jederzeit ersichtlich, welche Lagerkapazität in der Blutbank in welchen der unterschiedlich temperierten Blutlagervorrichtungen noch zur Verfügung steht. Zudem ist auch eine Erfassung und Speicherung der Lagerzeiten der einzelnen Blutbeutel möglich, sodass die maximale Lagerzeit erkannt und nicht mehr verwendbare Blutbeutel automatisch ausgesondert werden können.

Die Ansteuerung des Roboters sowie das Öffnen und Schließen der schubladenförmig gestalteten Lagerfächer und die Temperierung und Steuerung der einzelnen Blutlagervorrichtungen erfolgt vollautomatisch über eine zentrale Steuereinheit. Die Steuereinheit weist ein Bedienpanel für das Lagerpersonal auf, über welches die Bedarfseingabe zur Entnahme der spezifischen Blutbeutel oder auch der gewünschte Lagerort der eingegebenen Blutbeutel wählbar ist. Zudem werden insbesondere Informationen über die Lagerkapazität, die Temperierung der einzelnen Blutkühlschränke sowie die Lagerdauer der einzelnen Blutbeutel angezeigt.

Während der Entnahme verfährt der Roboter anhand der eingegebenen Bedarfsinformationen aufgrund des im Speicher der Steuereinheit hinterlegten Lagerinhalts in die jeweilige Position vor die Blutlagervorrichtung, wobei die automatische Öffnung des den spezifischen Blutbeutel enthaltenden Lagerfachs vorzugsweise bereits vor Ankunft des Roboters initiiert wird, sodass das schubladenförmige Lagerfach bei Ankunft des Roboters bereits geöffnet ist. Dabei ist die Öffnungszeit auf die Dauer des Entnahme- bzw. Ablagevorgangs optimiert, um einen Temperaturausgleich durch unnötige Öffnungszeiten mit der Umgebung weitestgehend zu verhindern. Alternativ kann auch erst ein Öffnen des schubladenförmigen Lagerfachs erst nach Ankunft des Roboters über den in diesem Fall am Roboter angeordneten oder neben der Blutlagervorrichtung als separat ausgestalteten Mechanismus angeordneten Öffnungsmechanismus erfolgen. Mittels des Barcode-Lesers erfolgt sodann die zweite Identifizierung des Blutbeutels und bei Übereinstimmung durch die pneumatisch betriebenen Bestückungs- und Entnahmevorrichtung die Aufnahme des Blutbeutels. An einer Eingabe-/Ausgabeöffnung des Lagerraums, vorzugsweise in Form einer Schleuse, erfolgt dann die Bereitstellung des Blutbeutels zur Entnahme durch das Lagerpersonal. Auf gleiche Weise erfolgt eine Bestückung der einzelnen Blutkühlschränke durch Einlegen des jeweiligen zu lagernden Blutbeutels in die Eingabe-/Ausgabeöffnung, aus welcher die einzulagernden Blutbeutel selbstständig abgeholt und nach Identifizierung über den Barcode-Scanner vollautomatisch auf die einzelnen Blutlagervorrichtungen entsprechend den freien Kapazitäten oder anhand der Eingabeinformationen verteilt werden. Es ist denkbar, gleichzeitig eine Mehrzahl an verschiedenen Blutbeuteln über die Steuereinheit aus dem Blutbanklagersystem zu entnehmen oder in das Blutbanklagersystem einzulagern, wobei die einzelnen Blutbeutel nacheinander in die vorgesehenen Blutlagervorrichtungen abgelegt werden. Denkbar ist auch eine Anordnung einer Mehrzahl von Robotern, welche die Aufträge gleichzeitig und vorzugsweise autonom abarbeiten.

Nach einer Weiterbildung der Erfindung ist mindestens eine Blutlagervorrichtung, vorzugsweise die der Eingabe-/Ausgabeöffnung am nahesten angeordnete Blutlagervorrichtung, für eilige Notfälle vorgesehen. Deren Bestückung und diesbezüglich abgesetzte Entnahmeaufträge werden im Rahmen eines Notfallprogramms bevorzugt ausgeführt, sodass weitere anstehende und weniger eilige Aufträge unterbrochen und nachrangig ausgeführt werden. Denkbar ist auch das Vorhalten von zusätzlichen Ersatz-Blutlagervorrichtungen, welche nur in Kapazitätsengpässen oder bei Ausfall einzelner Blutlagervorrichtungen in Betrieb genommen werden.

Vorteilhafterweise wird damit ein Blutbanklagersystem umfassend eine Mehrzahl an Blutlagervorrichtungen geschaffen, dass vollautomatisch die Einlagerung und die Entnahme von Blutbeuteln mit unterschiedlichsten Spezifikationen erlaubt. Die einzelnen Blutlagervorrichtungen sind autonom auf die jeweilige benötigte Temperatur regelbar. Die einheitliche Temperierung des gesamten Kühlraumes entfällt somit. Zudem wird eine Fehlbestückung und -entnahme sicher vermieden, da eine doppelte Identifikation des einzelnen Blutbeutels bereits bei Einlagerung erfolgt und die Lagerkapazität samt zugehörigen Informationen zu den eingelagerten Blutbeutel in der Steuereinheit vorgehalten und jederzeit abrufbar sind. Weiterhin ist ein schneller Zugriff auf die benötigten Blutkonserven sichergestellt, da bereits vor Entnahme die Position des benötigten Blutbeutels bekannt ist und die automatisierten Bewegungsabläufe einen schnellen und zuverlässigen Zugriff ermöglichen. Es wird somit auch mit Ausnahme von wenigen Wartungsaufenthalten der Zutritt in den Lagerraum durch das Lagerpersonal vermieden. Der weitestgehend zutrittsfreie Betrieb des Blutbanklagersystems in einem Reinraum wird damit ebenfalls möglich. Zudem ermöglicht das erfindungsgemäße Blutbanklagersystem, vorzugsweise umfassend eine Mehrzahl an Blutlagervorrichtungen, die individuelle und bedarfsgerechte Temperierung der einzelnen Blutlagervorrichtungen und somit einen ökonomischen und energiesparenden Einsatz des Blutbanklagersystems.

Es folgt eine Beschreibung eines speziellen Ausführungsbeispiels der erfindungsgemäßen Blutlagervorrichtung, des erfindungsgemäßen Blutbanklagersystems sowie erfindungsgemäßen Verfahrens zum Betreiben des erfindungsgemäßen Blutbanklagersystems anhand der Figuren, wobei
- Fig. 1: eine schematische perspektivische Ansicht der erfindungsgemäßen Blutlagervorrichtung mit geschlossenen Lagerfächern zeigt,

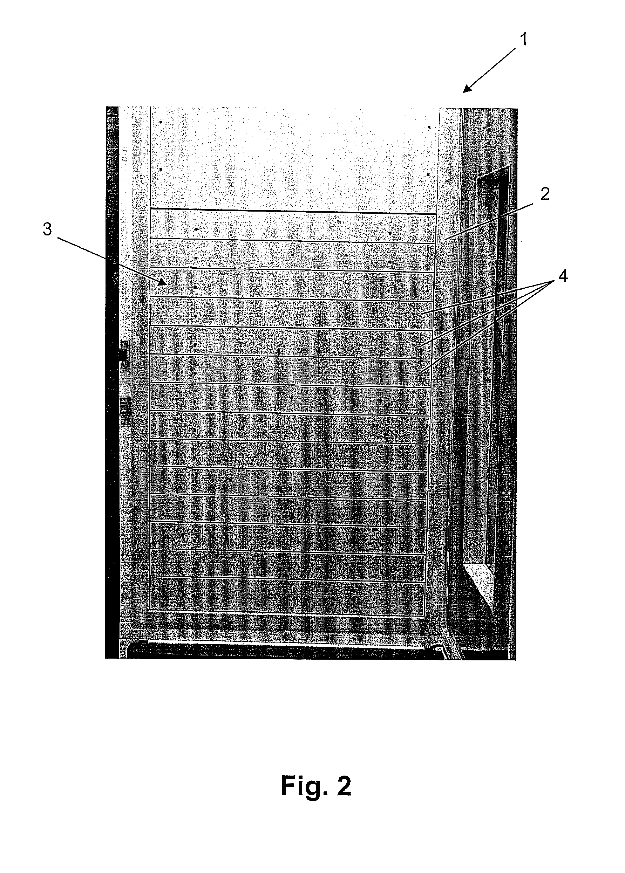

- Fig. 2: eine teilweise Frontansicht der erfindungsgemäßen Blutlagervorrichtung mit geschlossenen Lagerfächern zeigt,
- Fig. 3: ein schubladenförmiges Lagerfach der erfindungsgemäßen Blutlagervorrichtung in geöffnetem Zustand zeigt,
- Fig. 4: ein mit einem Blutbeutel beladenes Einzelfach eines schubladenförmigen Lagerfachs der erfindungsgemäßen Blutlagervorrichtung zeigt,
- Fig. 5: eine schematische Draufsicht auf ein erfindungsgemäßes Blutbanklagersystems umfassend eine Mehrzahl von erfindungsgemäßen Blutlagervorrichtungen zeigt und
- Fig. 6: eine weitere schematische Draufsicht auf ein erfindungsgemäßes Blutbanklagersystem umfassend eine Mehrzahl von erfindungsgemäßen Blutlagervorrichtungen zeigt.

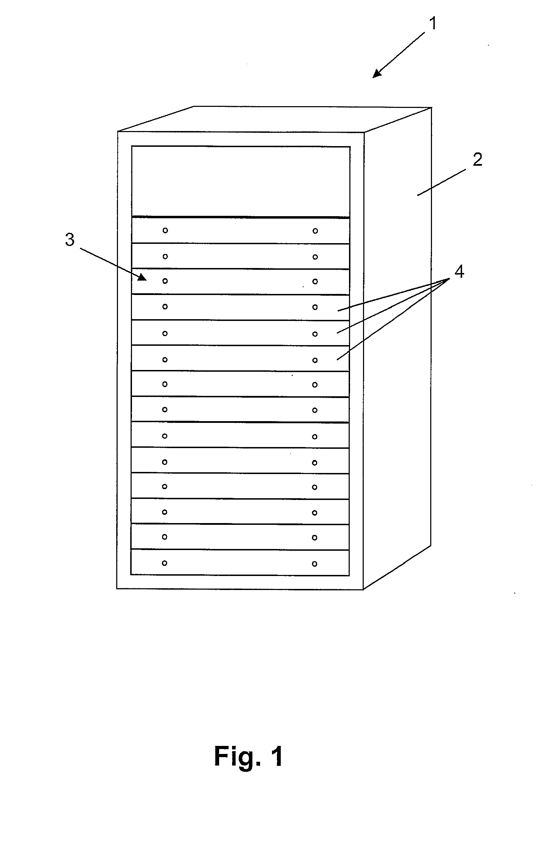

Die in Fig. 1 gezeigte Blutlagervorrichtung 1 ist in der Art eines herkömmlichen Kühlschranks mit einem thermoisolierten Gehäuse 2 ausgebildet, wobei der Kühlraum zur Lagerung der Blutbeutel 8 im Inneren des Gehäuses über eine an der Frontseite der Blutlagervorrichtung 1 angeordnete Zugangsöffnung 3 zugänglich ist. Über ein kombiniertes Heiz- und Kühlaggregat (nicht gezeigt) ist die einzelne Blutlagervorrichtung 1 auf die gewünschte Temperatur einstellbar.

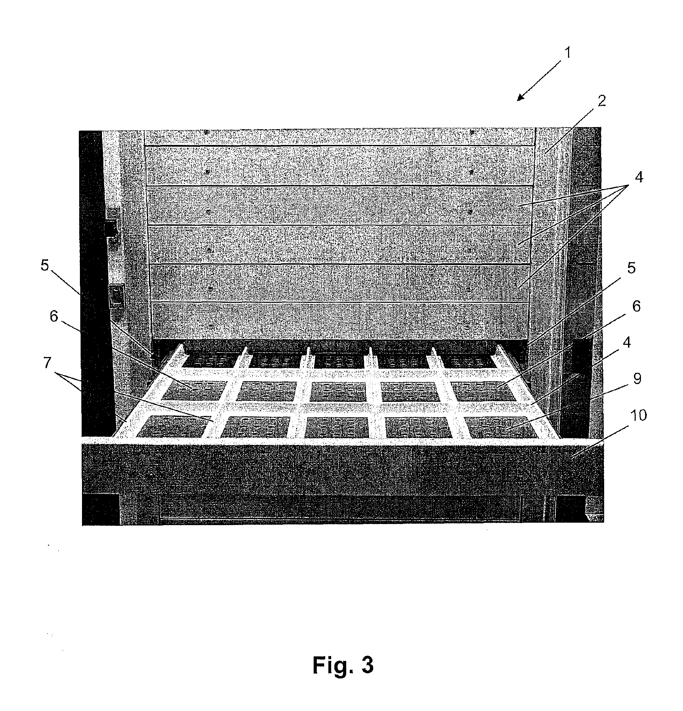

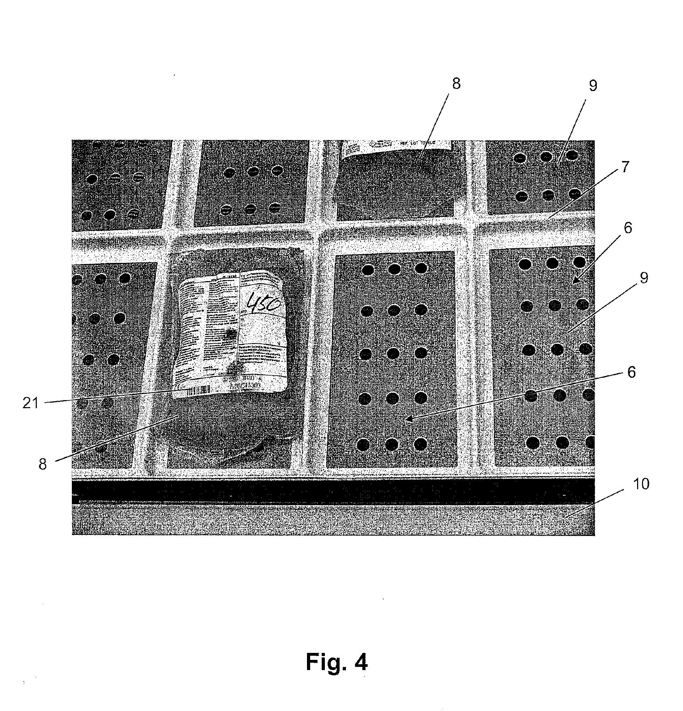

Die Blutlagervorrichtung 1 weist eine Mehrzahl von einzelnen Lagerfächern 4 auf, wobei das einzelne Lagerfach 4 in der Art einer Schublade ausgebildet ist. Das einzelne Lagerfach 4 ist dabei auf einem in Fig. 3 ersichtlichen Schienensystem 5 derart gelagert, dass es aus der Zugangsöffnung 3 ausziehbar ist. Das einzelne schubladenförmige Lagerfach 4 selbst weist dabei eine Unterteilung in drei Reihen mit jeweils fünf Einzelfächern 6, also insgesamt fünfzehn Einzelfächern 6 auf. Die Einzelfächer 6 sind dabei durch Wände 7 mit einer geringeren Wandhöhe als das schubladenförmige Lagerfach 4 voneinander abgegrenzt und derart gestaltet, dass der einzelne in Fig. 4 gezeigte Blutbeutel 8 im jeweiligen Einzelfach 6 liegend gelagert werden kann. Der Boden 9 des einzelnen schubladenförmigen Lagerfachs 4 und damit der Einzelfächer 6 ist als Lochmaske ausgebildet.

Das einzelne ausziehbare schubladenförmige Lagerfach 4 ist an der Frontseite mit einer thermoisolierten Blende 10 versehen, wobei die einzelnen Blenden 10, wie in Fig. 1 gezeigt, derart dimensioniert sind, dass die Zugangsöffnung 3 bei eingeschobener Stellung aller Lagerfächer 4 insgesamt verschlossen und damit der Innenraum der Blutlagervorrichtung 1 gegenüber dessen Umgebung thermoisoliert ist.

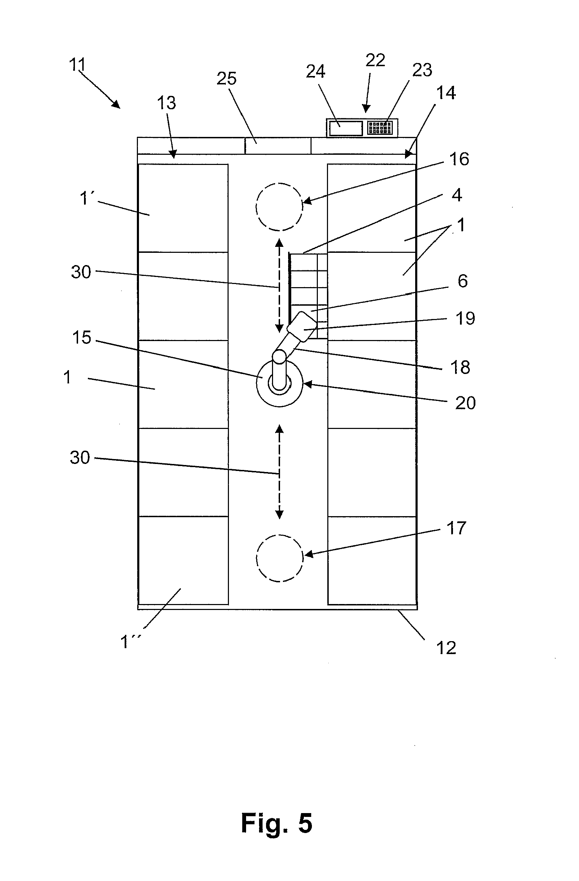

Das in der Fig. 5 gezeigte erfindungsgemäße Blutbanklagersystem 11 nach einer ersten Ausführungsform umfasst eine Anzahl von zehn in einem Lagerraum 12 angeordneten Blutlagervorrichtungen 1. Die zehn Blutlagervorrichtungen 1 des Blutbanklagersystems 11 sind in zwei parallel zueinander angeordneten Reihen 13, 14 angeordnet, wobei die Zugangsöffnungen 3 der Blutlagervorrichtungen 1 einander zugewandt sind.

Mittig zwischen den Reihen 13, 14 von Blutlagervorrichtungen 1 ist ein beweglicher Roboter 15 angeordnet, der zwischen schematisch angedeuteten Positionen 16, 17 entlang der Fahrstrecke 30 verfahrbar ist. In Position 16 erfolgt dabei die Aufnahme von einzulagernden Blutbeuteln 8 bzw. die Abgabe von aus den Blutlagervorrichtungen 1 entnommenen Blutbeuteln 8. Der Roboter 15 verfügt über eine an einem gelenkigen Arm 18 angeordnete Bestückungs- und Entnahmevorrichtung 19. Die Bestückungs- und Entnahmevorrichtung 19 ist pneumatisch betrieben und weist eine Mehrzahl an Saugnäpfen (nicht gezeigt) auf. Der Roboter 15 mit der Bestückungs- und Entnahmevorrichtung 19 befindet sich in der in Fig. 5 gezeigten Stellung in einer Entnahmeposition 20 vor einem Blutkühlschrank 1 mit ausgefahrenem Lagerfach 4. Die Bestückungs- und Entnahmevorrichtung 17 befindet sich über dem angewählten Einzelfach 6 des ausgefahrenen Lagerfachs 4 zur Entnahme des darin befindlichen Blutbeutels 8.

Die Bestückungs- und Entnahmevorrichtung 17 weist zudem eine als Barcode-Scanner ausgebildete Identifikationsvorrichtung auf (nicht gezeigt), welche eine Identifikation des jeweiligen Blutbeutels 8 über einen auf den Blutbeutel 8 aufgebrachten in Fig. 4 gezeigten Barcode- Aufkleber 21 ermöglicht.

Neben dem Barcode- Aufkleber 21 ist jeder Blutbeutel 8 mit einem RF/ID-Transponder (nicht gezeigt) ausgerüstet, der eine zweite Identifikation des einzelnen Blutbeutels 8, auch ohne optischen Kontakt, mittels elektromagnetischer Wellen ermöglicht. Jedes einzelne Lagerfach 4 weist dabei eine Leseeinheit (nicht gezeigt) auf, welche nach Bestückung des Lagerfachs 4 mit einem Blutbeutel 8 die mittels RF/ID-Transponder bereitgestellten Identifikationsinformationen des einzelnen Blutbeutels 8 ausliest und an eine in Fig. 5 gezeigte zentrale Steuereinheit 22 zur weiteren Verarbeitung und Speicherung übermittelt.

Die Ansteuerung des verfahrbaren Roboters 15 sowie das Öffnen und Schließen der schubladenförmig gestalteten Lagerfächer 4 und die Temperierung und Steuerung der einzelnen Blutlagervorrichtungen 1 erfolgt vollautomatisch nach einem über die zentrale Steuereinheit 22 eingegebenen Programm. Die Steuereinheit weist ein Bedienpanel 23 für das Lagerpersonal auf, über welches die Bedarfseingabe zur Entnahme der spezifischen Blutbeutel oder der gewünschte Lagerort der eingegebenen Blutbeutel 8 wählbar ist. Zudem werden insbesondere Informationen über die Lagerkapazität, die Temperierung der einzelnen Blutkühlschränke sowie die Lagerdauer der einzelnen Blutbeutel 8 im Display 24 angezeigt.

Während der Entnahme verfährt der Roboter 15 anhand der eingegebenen Bedarfsinformationen und aufgrund des im Speicher der Steuereinheit 22 hinterlegten Lagerinhalts in die jeweilige Position vor die Blutlagervorrichtung 1, wobei die automatische Öffnung des den spezifischen Blutbeutel 8 enthaltenden Lagerfachs 4 bereits vor Ankunft des Roboters 15 initiiert wird, sodass das schubladenförmige Lagerfach 4 bei Ankunft des Roboters 15 bereits ausreichend geöffnet ist. Mittels des Barcode- Lesers (nicht gezeigt) erfolgt sodann die zweite Identifizierung des Blutbeutels 8 und bei Übereinstimmung durch die pneumatisch betriebenen Bestückungs- und Entnahmevorrichtung 17 die Aufnahme des Blutbeutels 8. An einer Eingabe-/Ausgabeöffnung 25 des Lagerraums 12 erfolgt die Bereitstellung des Blutbeutels 8 zur Entnahme durch das Lagerpersonal. Auf gleiche Weise erfolgt eine Bestückung der einzelnen Blutkühlschränke 1 durch Einlegen des jeweiligen zu lagernden Blutbeutels 8 in die Eingabe-/Ausgabeöffnung 25, aus welcher die einzulagernden Blutbeutel 8 selbstständig abgeholt und nach Identifizierung über den Barcode-Scanner (nicht gezeigt) vollautomatisch auf die einzelnen Blutlagervorrichtungen 1 entsprechend den freien Kapazitäten oder anhand der Eingabeinformationen verteilt werden. Die Identifizierung des Blutbeutels 8 zur Speicherung der spezifischen Position erfolgt dann über die RF/ID-Transponder (nicht gezeigt).

Die unmittelbar an der Eingabe-/Ausgabeöffnung 25 angeordnete Blutlagervorrichtung 1' ist für eilige Notfälle vorgesehen. Seine Bestückung und diesbezüglich abgesetzte Entnahmeaufträge werden im Rahmen eines Notfallprogramms bevorzugt ausgeführt, sodass weitere anstehende und weniger eilige Aufträge nachrangig ausgeführt werden. Die am entferntesten angeordnete Blutlagervorrichtung 1 " ist für den Fall von Kapazitätsengpässen oder bei Ausfall einzelner Blutlagervorrichtungen 1 als zusätzlichen Ersatz- Blutlagervorrichtung konzipiert und nicht in den ständigen Betrieb integriert.

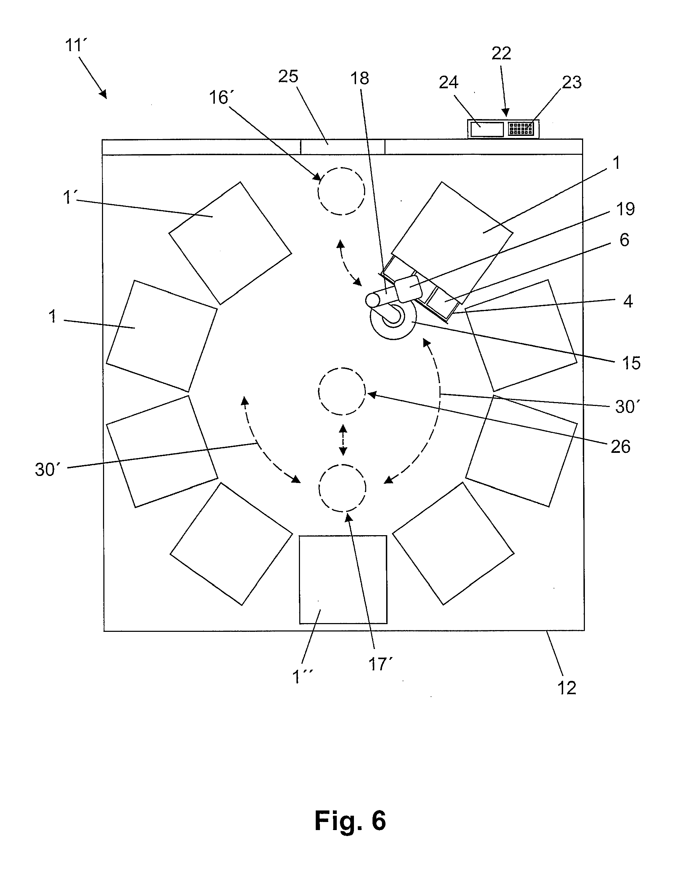

Das in der Fig. 6 gezeigte erfindungsgemäße Blutbanklagersystem 11' nach einer zweiten Ausführungsform entspricht Wesentlichen dem in Fig. 5 gezeigten Blutbanklagersystem 11, abgesehen von der abweichenden Anzahl der Blutlagervorrichtungen 1, deren Anordnung im Lagerraum 12 und der an der geänderten Anordnung der Blutkühlschränke 1 orientierten Verfahrstrecke 30' des Roboters 15. Dabei umfasst das Blutbanklagersystem 11' eine Anzahl von neun in dem Lagerraum 12 angeordneten Blutlagervorrichtungen 1. Die neun Blutlagervorrichtungen 1 des Blutbanklagersystems 11' sind im Wesentlichen kreisförmig bzw. hufeisenförmig angeordnet, wobei die Zugangsöffnungen 3 der Blutlagervorrichtungen 1 einander zugewandt sind.

Die Verfahrstrecke 30' des beweglichen Roboters 15 orientiert sich an der kreisförmigen Anordnung der Blutlagervorrichtungen 1, wobei der Roboter zwischen einer Vielzahl von Positionen, beispielhaft dargestellt als Positionen 16', 17', bewegbar ist. In Position 16' erfolgt dabei die Aufnahme von einzulagernden Blutbeuteln 8 bzw. die Abgabe von aus den Blutlagervorrichtungen entnommenen Blutbeuteln 8. Eine Parkposition 26 für den Roboter 15, in welche dieser beispielsweise bei Wartungsarbeiten gefahren werden kann, ist mittig angeordnet.

## Patentansprüche

1. Blutlagervorrichtung (1) zur Lagerung von Blutbeuteln (8), insbesondere in einer Blutbank, **dadurch gekennzeichnet, dass** die Blutbanklagervorrichtung (1) ein einen Kühlraum umschließendes und eine Zugangsöffnung (3) aufweisendes Gehäuse (2) und ein Heiz- und Kühlaggregat umfasst, wobei im Kühlraum eine Mehrzahl von schubladenförmig ausgebildeten Lagerfächern (4) vorgesehen ist und das einzelne Lagerfach (4) der Mehrzahl von schubladenförmig ausgebildeten Lagerfächern (4) derart beweglich auf einem Schienensystem (5) gelagert ist, dass das einzelne Lagerfach (4) aus der Zugangsöffnung (3) ausziehbar ist.

2. Blutlagervorrichtung (1) nach Anspruch 1, **dadurch gekennzeichnet, dass**
das einzelne schubladenförmig ausgebildete Lagerfach (4) eine Unterteilung in eine Mehrzahl von Einzelfächern (6) aufweist.

3. Blutlagervorrichtung (1) nach Anspruch 2, **dadurch gekennzeichnet, dass**
die einzelnen Einzelfächer (6) der Mehrzahl von Einzelfächern (6) durch vorzugsweise bewegliche Wände (7) voneinander abgegrenzt sind.

4. Blutlagervorrichtung (1) nach Anspruch 3, **dadurch gekennzeichnet, dass**
der Boden des einzelnen schubladenförmigen Lagerfachs (4) als Lochmaske ausgebildet ist.

5. Blutlagervorrichtung (1) nach einem der vorhergehenden Ansprüche, **dadurch gekennzeichnet, dass**
das einzelne schubladenförmige Lagerfach (4) an seiner Frontseite eine thermoisolierte Blende (10) aufweist, wobei die einzelne Blende (10) derart dimensioniert, dass die Zugangsöffnung (5) bei eingeschobener Stellung der Mehrzahl der Lagerfächer (4) insgesamt verschlossen und gegenüber der Umgebung der Blutlagervorrichtung (1) thermoisoliert ist.

6. Blutlagervorrichtung (1) nach Anspruch 5, **dadurch gekennzeichnet, dass**
das an der Frontseite der einzelnen Blende (10) weitere Halterungen und/oder Bedienelemente, insbesondere zur Aufnahme von Identifikationseinrichtungen, vorgesehen sind.

7. Blutlagervorrichtung (1) nach Anspruch 5 oder 6, **dadurch gekennzeichnet, dass**
an der Fronseite der einzelnen Blende (10) eine Griffleiste zum manuellen Öffnen und/oder eine Eingriffsvorrichtung zum Angreifen einer separaten automatischen Öffnungsvorrichtung vorgesehen ist.

8. Blutlagervorrichtung (1) nach Anspruch 1, **dadurch gekennzeichnet, dass**
das Schienensystem (5) mit einem vorzugsweise als elektrischen Motor ausgebildeten Antrieb ausgestattet und mittels diesem bewegbar ist.

9. Blutlagervorrichtung (1) nach Anspruch 8, **dadurch gekennzeichnet, dass**
der Antrieb durch eine zentrale, vorzugsweise außerhalb der Blutlagervorrichtung (1) angeordnete Steuereinheit (22) ansteuerbar ist.

10. Blutlagervorrichtung (1) nach Anspruch 8 oder 9, **dadurch gekennzeichnet, dass**
das Schienensystem (5) eine Notfallöffnung aufweist

11. Blutbanklagersystem (11) umfassend mindestens eine, vorzugsweise eine Mehrzahl von Blutlagervorrichtungen (1) einem der vorangehenden Ansprüche 1 bis 10, **dadurch gekennzeichnet, dass**
das Blutbanklagersystem (11) einen zwischen den Blutlagervorrichtungen (1), vorzugsweise auf einen Schienensystem verfahrbaren Roboter (15) aufweist.

12. Blutbanklagersystem (11) nach Anspruch 11, **dadurch gekennzeichnet, dass**
das der Roboter (15) mit einer vorzugsweise an einem gelenkigen Arm (18) angeordnete Bestückungs- und Entnahmevorrichtung (19) versehen ist.

13. Blutbanklagersystem (11) nach Anspruch 12, **dadurch gekennzeichnet, dass**
das die Bestückungs- und Entnahmevorrichtung (19) pneumatisch betreibbar ist und mindestens einen Saugnapf, vorzugsweise eine Mehrzahl an Saugnäpfen aufweist.

14. Blutbanklagersystem (11) nach Anspruch 12 oder 13, **dadurch gekennzeichnet, dass**
einen Öffnungsmechanismus zum Öffnen des einzelnen schubladenförmigen Lagerfachs (4) vorgesehen ist und der Öffnungsmechanismus an der Bestückungs- und Entnahmevorrichtung (19) oder als separate Einrichtung neben der Blutlagervorrichtung (1) angeordnet ist.

15. Blutbanklagersystem (11) nach einem der Ansprüche 12 bis 14,
**dadurch gekennzeichnet, dass**
die Bestückungs- und Entnahmevorrichtung (19) eine Identifikationsvorrichtung, insbesondere einen Barcode-Scanner, zur Identifikation von auf den Blutbeuteln (8) aufgebrachten Identifikationsmitteln aufweist.

16. Blutbanklagersystem (11) nach einem der Ansprüche 11 bis 15,
**dadurch gekennzeichnet, dass**
die Mehrzahl von schubladenförmigen Lagerfächern (4) einen RF/ID-Transponder zur elektromagnetischen Identifikation von auf den Blutbeuteln (8) aufgebrachten Identifikationsmitteln aufweist.

17. Blutbanklagersystem (11) nach einem der Ansprüche 11 bis 16,
**dadurch gekennzeichnet, dass**
das Blutbanklagersystem (11) zur Eingabe von Aufträgen und Informationen und zur Steuerung des Roboters (15) und des mindestens einen Blutkühlschranks (1) eine zentrale Steuereinheit (23) umfasst.

18. Blutbanklagersystem (11) nach einem der Ansprüche 11 bis 17,
**dadurch gekennzeichnet, dass**
das Blutbanklagersystem (11) in einem Lagerraum (12) angeordnet ist, wobei der Lagerraum (12) eine Eingabe- und Ausgabeöffnung (25) aufweist.

19. Blutbanklagersystem (11) nach einem der Ansprüche 11 bis 18,
**dadurch gekennzeichnet, dass**
das mindestens eine Blutlagervorrichtung (1) als Notfall-Blutlagervorrichtung (1) mit vorrangiger Auftragsverarbeitung definiert ist.

20. Verfahren zum Betrieb einer Blutbanklagervorrichtung (11) nach einem der Ansprüche 11 bis 19, umfassend die Schritte
a) Eingeben des Befehls zum Einlagern oder zur Entnahme mindestens eines spezifischen Blutbeutels (8) über die Steuereinheit (22);
b) Verfahren des Roboters (15) in die Aufnahme- oder Entnahmeposition (16, 20);
c) Identifikation des Blutbeutels (8) mittels der Identifikationsvorrichtung, insbesondere des Barcode-Scanners, und Identifikationsmitteln auf dem Blutbeutel (8);
d) Aufnahme des Blutbeutels (8) über die Bestückungs- und Entnahmevorrichtung (19) des Roboters (15);
e) Verfahren des Roboters (15) in die Abgabeposition (16; 20); und
f) Ablegen des Blutbeutels (8) in der Eingabe- und Ausgabeöffnung (25) oder im angewählten Lagerfach (4).

21. Verfahren zum Betrieb einer Blutbanklagervorrichtung (11) nach Anspruch 20, wobei die Schritte b) und e) zusätzlich folgende Schritte umfassen
g) Initiierung des Öffnungsvorgangs der Eingabe- und Ausgabeöffnung (25) oder des angewählten Lagerfachs (4); und
h) Öffnen der Eingabe- und Ausgabeöffnung (25) oder des angewählten Lagerfachs (4) bis zur notwendigen Lagerfachstellung zur Aufnahme des Blutbeutels.

22. Verfahren zum Betrieb einer Blutbanklagervorrichtung (11) nach Anspruch 20 oder 21, wobei der Schritt f) zusätzlich folgende Schritte umfasst
i) Identifikation des RF/ID-Senders auf dem Blutbeutel (8) und Übertragung der Position des Blutbeutels (8) an die Steuereinheit (22); und
j) Abspeichern der Informationen in der Steuereinheit (22).
